# EUROPÄISCHE PATENTANMELDUNG

(11) **EP 4 456 351 A1**
(43) Veröffentlichungstag der Anmeldung: **30.10.2024**
(21) Anmeldenummer: 23169786.3
(22) Anmeldetag: 25.04.2023
(51) Int. Cl.: H02G 3/14, H02G 3/10, H01R 13/66, H01R 13/74, H01R 24/76, H01R 24/78, H01R 27/02, H02B 1/46, H02G 3/08, H05K 5/00, H05K 7/14

(54) **ELEKTRISCHES/ELEKTRONISCHES GERÄT UND VERFAHREN ZUM ABLEITEN VON WÄRME EINES ELEKTRISCHEN/ELEKTRONISCHEN GERÄTES**

(71) Anmelder: Albrecht Jung GmbH & Co. KG, 58579 Schalksmühle (DE)
(72) Erfinder: Willer, Mathias, 58553 Halver (DE); Biniossek, Nik, 58099 Hagen (DE)
(74) Vertreter: Fobbe, Tobias

(57) **Zusammenfassung**

Die Erfindung betrifft ein elektrisches/elektronisches Gerät 1 für die Gebäudeinstallationstechnik mit einem, von einem Abdeckrahmen 2 umgebenen Zentralstück 3 und einem, an einem Tragring 4 festgelegten Sockelteil 5, wobei am Sockelteil 5 eine Spannungsversorgungseinheit 6 festlegbar ist, die kontaktgebend mit dem Sockelteil 5 in Wirkverbindung kommt, wobei die Spannungsversorgungseinheit 6 lösbar mit dem Sockelteil 5 verbindbar ist. Bei einem elektrischen Gerät 1, bei dem eine effiziente Wärmeabfuhr realisiert werden kann, wobei gleichzeitig die Kosten bei der Herstellung minimiert werden, ist ein Wärmeleitelement 8 vorgesehen, wobei das Wärmeleitelement 8 mit einer ersten Seite 9 mit der Spannungsversorgungseinheit 6 kontaktiert ist und wobei das Wärmeleitelement 8 mit einer gegenüberliegenden zweiten Seite 10 mit dem Tragring 4 in Kontakt steht.

## Beschreibung

Die Erfindung betrifft ein elektrisches/elektronisches Gerät für die Gebäudeinstallationstechnik mit einem, von einem Abdeckrahmen umgebenen Zentralstück und einem, an einem Tragring festgelegten Sockelteil, wobei am Sockelteil eine Spannungsversorgungseinheit festlegbar ist, die kontaktgebend mit dem Sockelteil in Wirkverbindung kommt, wobei die Spannungsversorgungseinheit lösbar mit dem Sockelteil verbindbar ist.

Daneben betrifft die Erfindung ein Verfahren zum Ableiten von Wärme eines erfindungsgemäßen elektrischen/elektronischen Gerätes.

Im Stand der Technik sind derartige elektrische beziehungsweise elektronische Geräte in einer Vielzahl an Ausgestaltungen bekannt. Vorgenannte elektrische beziehungsweise elektronische Geräte werden häufig als Schutzkontaktsteckdosen, Orientierungsleuchten, Datenanschlussgeräte, Schaltgeräte, Dimmer und so weiter ausgeführt. Sie sind zum elektrischen Anschluss von Verbrauchern und/oder zur Beeinflussung von angeschlossenen Aktoren, wie Beleuchtungseinrichtungen, Rollladensteuerungen, Jalousiesteuerungen, Heizungsreglern und so weiter vorgesehen. Mittlerweile sind auch elektrische/elektronische Geräte bekannt, welche als Schutzkontaktsteckdose ausgeführt sind und zusätzlich einen USB-Anschluss aufweisen.

Die EP 2 741 374 B1 offenbart beispielsweise ein elektrisches beziehungsweise elektronisches Gerät für die Gebäudeinstallationstechnik, bei dem eine Funktionsbaugruppe vorgesehen ist, die einen USB-Anschluss umfasst. Die elektrischen Geräte werden vorzugsweise in einer Installationsausnehmung Unterputz in der Wand eines Gebäudes installiert. Eine solche Anordnung weist einen vergleichsweise komplexen, raumgreifenden Aufbau auf, wodurch die Installation in einer Installationsausnehmung beziehungswiese in einer Installationsdose erschwert wird.

Die große Funktionsvielfalt der Geräte für die Gebäudeinstallationstechnik fordert auch einen höheren Energieeintrag. Da der Bauraum bei der Installation und Befestigung der elektronischen beziehungsweise elektrischen Geräte allerdings größtenteils standardisiert ist, müssen immer mehr Funktionen auf kleinstem Raum untergebracht werden. Die Kombination aus höherem Energieeintrag und kleinem Bauraum führt zu einer Wärmeentwicklung, die möglichst aus dem Gerät heraus transportiert werden muss, um ein Überhitzen des Gerätes und daraus resultierende Schäden an dem elektrischen beziehungsweise elektronischen Gerät zu vermeiden.

Heutzutage werden in Netzteilen wärmeleitende Vergussmaterialien eingesetzt, um die Hotspots innerhalb eines Wandlers zu begrenzen beziehungsweise die entstehende Wärme zum Gehäuse abzuführen. Dadurch wird die Beanspruchung der Komponenten bei Temperaturschwankungen verringert. Ein Vergießen ist jedoch relativ teuer und erfordert zusätzliche manuelle Schritte.

Der Erfindung liegt daher die Aufgabe zugrunde, ein elektrisches beziehungsweise elektronisches Gerät sowie ein Verfahren zum Ableiten von Wärme eines erfindungsgemäßen elektrischen/elektronischen Gerätes anzugeben, bei denen eine effiziente Wärmeabfuhr realisiert werden kann, wobei gleichzeitig die Kosten bei der Herstellung minimiert werden.

Diese Aufgabe ist bei der vorliegenden Erfindung durch die Merkmale des Kennzeichnungsteils des Patentanspruchs 1 zunächst dadurch gelöst, dass ein Wärmeleitelement vorgesehen ist, dass das Wärmeleitelement mit einer ersten Seite mit der Spannungsversorgungseinheit kontaktiert ist und dass das Wärmeleitelement mit einer gegenüberliegenden zweiten Seite mit dem Tragring in Kontakt steht.

Bei dem Abdeckrahmen handelt es sich um eine Blende für die Installation des elektrischen beziehungsweise elektronischen Gerätes in einer Hausinstallation. Elektronische Kleinstbauteile werden durch den Abdeckrahmen zum einen geschützt und zum anderen verdeckt, sodass eine ästhetischere Optik im eingebauten Zustand gewährleistet werden kann.

Das Zentralstück dient ebenfalls zum einen als Schutz für elektrische Kontakte, kann aber gleichzeitig auch eine Steckkontaktbuchse zur Aufnahme eines Steckkontaktes, beispielsweise des Anschlusskabels eines elektrischen Gerätes, beinhalten.

Der Tragring ist dafür vorgesehen, das elektrische beziehungsweise elektronische Bauteil in einer Installationsausnehmung zu fixieren. Der Tragring kann einen größeren Durchmesser aufweisen als die Installationsausnehmung. Dazu kann der Tragring eine Anlagefläche aufweisen, die an der Bewandung um die Installationsausnehmung anliegt. Mittels geeigneter Befestigungsmittel, beispielsweise einer Schraubverbindung, kann der Tragring an der Bewandung um die Installationsausnehmung befestigt werden.

Das Sockelteil, das einen Teil der elektrischen beziehungsweise elektronischen Bauteile umfasst, die zur elektrischen Kontaktierung eines Verbrauchers mit der Spannungsversorgungseinheit notwendig sind, kann am Tragring befestigt sein oder zumindest teilweise einstückig mit dem Tragring ausgebildet sein.

Die Spannungsversorgungseinheit ist ein zusätzliches Bauteil, das ein Gehäuse aufweisen kann und an dem Sockelteil befestigt werden kann. Der modulare Aufbau bewirkt, dass unterschiedliche Spannungsversorgungseinheiten für unterschiedliche Anwendungsfälle genutzt werden können, wobei das Sockelteil unverändert bleibt.

Dabei ist die Spannungsversorgungseinheit lösbar mit dem Sockelteil verbindbar. Lösbar bedeutet in diesem Zusammenhang, dass die Spannungsversorgungseinheit zerstörungsfrei von dem Sockelteil gelöst werden kann.

Bei dem Wärmeleitelement kann es sich um ein flach ausgestaltetes Bauteil handeln, das ein Material umfasst, oder aus einem Material besteht, welches einen hohen Wärmeleitkoeffizienten aufweist. Durch die flache Ausgestaltung kann das Wärmeleitelement platzsparend im elektrischen beziehungsweise elektronischen Gerät verbaut werden. Denkbar wäre eine Dicke kleiner 4 mm, bevorzugt 3 mm. Das Wärmeleitelement weist eine erste Seite und eine zweite Seite beziehungsweise eine Oberseite und eine Unterseite auf.

Die Kontaktierung der Oberseite beziehungsweise der Unterseite erfolgt durch Anliegen der entsprechenden Seite an dem entsprechenden weiteren Element, also der Spannungsversorgungseinheit beziehungsweise dem Tragring. Dazu kann vorgesehen sein, dass das Wärmeleitelement flexibel ausgestaltet ist, sodass das Wärmeleitelement um etwaige Ausbuchtungen herum beziehungsweise auch in Senken hinein geführt werden kann, sodass eine maximale Kontaktierung der jeweiligen Seite mit dem jeweiligen Bauteil realisiert werden kann.

Ein erster Vorteil der Erfindung besteht darin, dass Wärme über größere Flächen abgeführt und weiter an den Tragring abgegeben wird, wodurch die Fläche, über die Wärme transportiert wird, weiter vergrößert wird. Es entstehen keine "Hotspots", in denen in bestimmten Bereichen eine besonders hohe Wärmeentwicklung wahrgenommen werden kann, die unter Umständen schädlich für das elektrische beziehungsweise elektronische Gerät sein könnten.

Der Tragring liegt im eingebauten Zustand des elektrischen beziehungsweise elektronischen Gerätes an einer Wand an, in der eine Installationsdose integriert ist. Durch die Wärmeleitung über das Wärmeleitelement an den Tragring, wird die Wärme auch aus der Installationsdose abgeleitet und kann dort nicht gestaut werden.

Weitere bevorzugte Ausgestaltungen der Erfindung ergeben sich aus den übrigen, in den Unteransprüchen genannten Merkmalen.

Bei einem ersten Ausführungsbeispiel des erfindungsgemäßen elektrischen Gerätes ist vorgesehen, dass an dem Tragring eine Wärmeleitbrücke ausgebildet ist, die mit dem Wärmeleitelement in Kontakt steht. Durch eine Wärmeleitbrücke kann die Wärme, die durch das Wärmeleitelement von der Spannungsversorgungseinheit aufgenommen wird, an die Wärmeleitbrücke und von der Wärmeleitbrücke an den Tragring übertragen werden, ohne, dass der Teil des Tragrings, der an einer Wand anliegt, nicht in unmittelbarem Kontakt mit dem Wärmeleitelement stehen muss.

Bei einer weiteren vorteilhaften Ausgestaltung des erfindungsgemäßen elektrischen beziehungsweise elektronischen Gerätes ist vorgesehen, dass die Wärmeleitbrücke einstückig mit dem Tragring ausgebildet ist und dass die Wärmeleitbrücke von dem Tragring abgebogen ist. Durch die einstückige Ausgestaltung der Wärmeleitbrücke und des Tragrings findet keine Entkopplung statt, sodass eine Wärmeübertragung von dem Wärmeleitelement über die Wärmeleitbrücke an den restlichen Tragring ohne Weiteres erfolgen kann. Durch die Wärmeübertragung an den gesamten Tragring, verteilt sich die aufgenommene Energie entsprechend auf die gesamte Oberfläche des Tragrings.

Bei einer besonders bevorzugten Ausgestaltung des erfindungsgemäßen elektrischen beziehungsweise elektronischen Gerätes kann vorgesehen sein, dass die Wärmeleitbrücke zusätzlich einstückig mit dem Wärmeleitelement ausgebildet ist. Auf diese Weise kontaktiert sind die Wärmeleitbrücke und das Wärmeleitelement vereinfacht durch Biegung eines Teils des Tragrings herstellbar. Wenn die Spannungsversorgungseinheit beispielsweise bereits isoliert ist, bietet es sich an, die Wärmeleitbrücke und das Wärmeleitelement aus demselben Material in einem Arbeitsschritt herzustellen.

Dabei kann bei einer weiteren Ausgestaltung des erfindungsgemäßen elektrischen beziehungsweise elektronischen Gerätes vorgesehen sein, dass die Wärmeleitbrücke eine erste Biegung und eine zweite Biegung aufweist, wobei sich die Wärmeleitbrücke nach der ersten Biegung, ausgehend vom Tragring, etwa senkrecht zur Ebene des Tragrings erstreckt und dass sich die Wärmeleitbrücke nach der zweiten Biegung, ausgehend vom Tragring, etwa parallel zur Ebene des Tragrings erstreckt. Die Wärmeleitbrücke hat folglich eine L-förmige Ausgestaltung. Dabei kann vorgesehen sein, dass die Wärmeleitbrücke nach der ersten Biegung eine kürzere Längserstreckung aufweist als nach der zweiten Biegung. Der Abschnitt der Wärmeleitbrücke nach der zweiten Biegung liegt an dem Wärmeleitelement an. Je größer die Fläche des Abschnittes nach der zweiten Biegung, desto effektiver wird der Wärmeübergang vom Wärmeleitelement auf die Wärmeleitbrücke und somit auf den Tragring. Wenn das Wärmeleitelement und die Wärmeleitbrücke einstückig ausgebildet sind, ist der Abschnitt der Wärmeleitbrücke nach der zweiten Biegung gleichzeitig auch das Wärmeleitelement.

Bei einer weiteren Ausgestaltung der Erfindung ist vorgesehen, dass die Spannungsversorgungseinheit einen Transformator umfasst, dass der Transformator derart angeordnet ist, dass das Wärmeleitelement mit dem Transformator in Kontakt steht. Maßgeblich verantwortlich für die Wärmeentwicklung ist ein Transformator in einem Netzteil beziehungsweise in einer Spannungsversorgungseinheit. Liegt der Transformator in unmittelbarer Nähe des Wärmeleitelements, kann die Wärme effizient an das Wärmeleitelement und somit aus dem elektrischen beziehungsweise elektronischen Bauteil heraus transportiert werden.

Bei einer weiteren besonders bevorzugten Ausgestaltung des erfindungsgemäßen elektrischen beziehungsweise elektronischen Gerätes ist vorgesehen, dass die Spannungsversorgungseinheit ein Netzteil umfasst. Besonders bevorzugt kann das Netzteil eine Leistung von 60 Watt oder mehr aufbringen. Es hat sich gezeigt, dass bei einer Leistung in diesem Bereich die Wärmeleitung beziehungsweise das Abführen der Wärme derart effizient realisiert werden kann, dass keine Beschädigung von Bauteilen durch Überhitzung zu befürchten ist. Gleichzeitig heizt sich der Tragring auch nicht derart auf, dass mit Verbrennungen oder ähnlichem gerechnet werden muss.

Vorteilhafterweise ist bei einer weiteren Ausgestaltung der Erfindung vorgesehen, dass das Wärmeleitelement die Spannungsversorgungseinheit mit der ersten Seite derart abdeckt, dass eine elektrische Isolierung durch das Wärmeleitelement realisiert ist. Wenn das Wärmeleitelement eine Seite der Spannungsversorgungseinheit derart abdeckt, können potentielle Funkenstrecken, die sich bilden könnten, ausgeschlossen werden. Eine solche Isolierung wäre beispielsweise auch durch eine Luftstrecke von etwa 3 mm erreicht. Die Isolierung durch das Wärmeleitelement, beispielsweise in einer ähnlichen Dicke von 3 mm, erhöht die elektrische Isolierung aber weiter. Das Wärmeleitelement kann zu diesem Zweck aus einem elektrisch nicht leitenden Material hergestellt sein, welches aber dennoch einen hohen Wärmeleitkoeffizienten aufweist.

Bei einer weiteren Ausgestaltung des erfindungsgemäßen elektronischen beziehungsweise elektrischen Gerätes ist vorgesehen, dass das Wärmeleitelement mindestens eine Fläche von 70 mm² der Spannungsversorgungseinheit kontaktiert. Eine Kontaktierung in diesem vorgenannten Bereich ermöglicht einen effizienten Wärmeübergang und ist, aufgrund einer flachen Ausgestaltung des Wärmeleitelements, ohne Weiteres möglich.

Um eine Erwärmung des Gerätes von außen zu minimieren, ist bei einer weiteren Ausgestaltung des erfindungsgemäßen elektronischen beziehungsweise elektrischen Gerätes vorgesehen, dass der Abdeckrahmen derart angeordnet ist, dass er nicht unmittelbar in Kontakt mit dem Tragring steht. Der Abdeckrahmen ist folglich, insbesondere thermisch, entkoppelt vom Tragring. Auf diese Weise kann der Abdeckrahmen nicht unmittelbar mit dem Tragring in Kontakt geraten, wodurch eine Wärmeübertragung auf den Tragring minimiert wird. Durch eine isolierende Luftschicht erhitzt sich der Abdeckrahmen nicht und die Gefahr von Verbrennungen, insbesondere durch Berührungen eines Anwenders, können verhindert werden.

Bei einer besonders bevorzugten Ausgestaltung des erfindungsgemäßen elektronischen beziehungsweise elektrischen Gerätes ist eine Funktionsbaugruppe vorgesehen, wobei die Funktionsbaugruppe eine Anschlusseinheit aufweist und wobei die Anschlusseinheit einer im Zentralstück vorhandenen Anschlussausnehmung zugeordnet ist. Die Funktionsbaugruppe kann beispielsweise Steckerstifte aufweisen, die zu einer Steckerstiftleiste zusammengefasst werden können. Die elektrische Anschlusseinheit kann bevorzugt als USB-Anschluss ausgeführt sein, wobei unterschiedliche USB-Anschlusstypen in der Anwendung denkbar sind, beispielsweise USB-Anschluss Typ-A und USB-Anschluss Typ-C. In Kombination mit einem Netzteil, das mindestens 50 Watt Leistung aufbringen kann, kann ein breites Spektrum der USB-C Funktionalität im Bereich der "Power Delivery" realisiert werden.

Die vorgenannte Aufgabe wird außerdem gelöst von einem Verfahren zum Ableiten von Wärme eines elektrischen/elektronischen Gerätes, wobei Wärme einer Spannungsversorgungseinheit über ein mit der Spannungsversorgungseinheit in Kontakt stehendes Wärmeleitelement über eine Wärmeleitbrücke, die am Tragring ausgebildet ist, an den Tragring übertragen wird. Es ist vorgesehen, dass das elektrische/elektronische Gerät erfindungsgemäß ausgestaltet ist. Die obigen Ausführungen betreffend das erfindungsgemäße elektrisch/elektronische Gerät gelten entsprechend auch für das erfindungsgemäße Verfahren. Dadurch, dass das Wärmeleitelement die durch die Spannungsversorgungseinrichtung erzeugte Wärme über die Wärmeleitbrücke an den Tragring weiterleitet, kann die Wärme auf eine vergleichsweise große Fläche verteilt werden, sodass ein Überhitzen einzelner Bauteile nicht erfolgt.

Elektronische oder elektrische Geräte und/oder andere relevante Geräte oder Komponenten gemäß den hier beschriebenen Ausführungsformen der vorliegenden Erfindung können unter Verwendung jeder geeigneten Hardware, Firmware (z. B. einer anwendungsspezifischen integrierten Schaltung), Software oder einer Kombination aus Software, Firmware und Hardware implementiert werden. Beispielsweise können die verschiedenen Komponenten dieser Geräte auf einem integrierten Schaltkreis (IC) oder auf separaten IC-Chips untergebracht sein. Darüber hinaus können die verschiedenen Komponenten dieser Geräte auf einer flexiblen gedruckten Schaltungsfolie, einem Tape-Carrier-Package (TCP), einer Leiterplatte (PCB) oder auf einem einzigen Substrat implementiert sein. Darüber hinaus können die verschiedenen Komponenten dieser Vorrichtungen ein Prozess oder Thread sein, der auf einem oder mehreren Prozessoren in einem oder mehreren Computergeräten läuft, Computerprogrammanweisungen ausführt und mit anderen Systemkomponenten interagiert, um die verschiedenen hier beschriebenen Funktionen auszuführen. Die Computerprogrammanweisungen sind in einem Speicher gespeichert, der in einem Computergerät unter Verwendung eines Standardspeichers, wie z. B. eines Arbeitsspeichers (RAM), implementiert werden kann. Die Computerprogrammanweisungen können auch in anderen nicht-übertragbaren, computerlesbaren Medien gespeichert werden, wie z. B. auf einer CD-ROM, einem Flash-Laufwerk oder ähnlichem. Eine fachkundige Person sollte auch erkennen, dass die Funktionalität verschiedener Computergeräte kombiniert oder in ein einziges Computergerät integriert werden kann, oder dass die Funktionalität eines bestimmten Computergeräts auf ein oder mehrere andere Computergeräte verteilt werden kann, ohne vom Anwendungsbereich der beispielhaften Ausführungsformen der vorliegenden Erfindung abzuweichen.

Die verschiedenen in dieser Anmeldung genannten Ausführungsformen der Erfindung sind, sofern im Einzelfall nicht anders ausgeführt, mit Vorteil miteinander kombinierbar.

Die Erfindung wird nachfolgend in Ausführungsbeispielen anhand der zugehörigen Zeichnungen erläutert. Es zeigen:
- Figur 1: prinziphaft ein als elektrische Steckvorrichtung ausgebildetes elektrisches/elektronisches Gerät gemäß einem erstem Ausführungsbeispiel,
- Figur 2: eine Schnittdarstellung des elektrischen Gerätes gemäß Figur 1 in einem Längsschnitt und
- Figur 3: einen Teil des Ausführungsbeispiels gemäß den Figuren 1 und 2 in einer perspektivischen Darstellung.

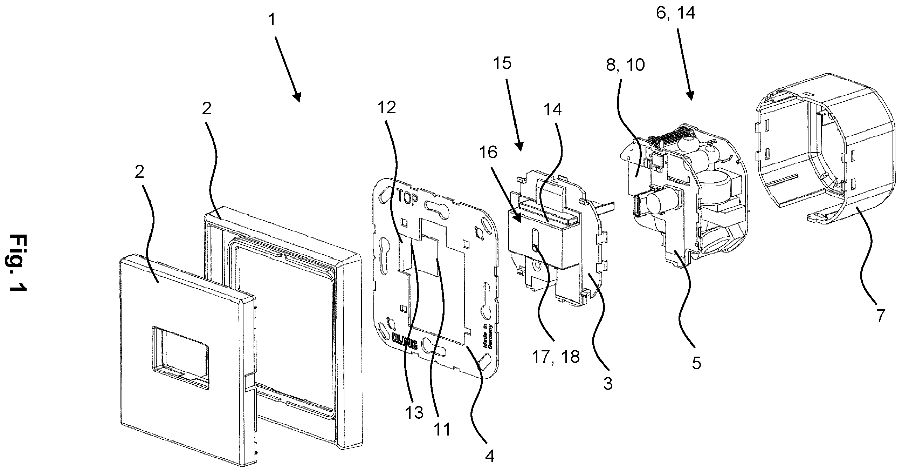

Figur 1 zeigt ein elektrisches/elektronisches Gerät 1 für die Gebäudeinstallationstechnik mit einem von einem Abdeckrahmen 2 umgebenen Zentralstück 3 und einem, an einem Tragring 4 festgelegten Sockelteil 5, wobei am Sockelteil 5 eine Spannungsversorgungseinheit 6 festlegbar ist, die kontaktgebend mit dem Sockelteil 5 in Wirkverbindung kommt. Das elektrische beziehungsweise elektronische Gerät 1 weist ein Gehäuse 7 auf, welches in einer Unterputzdose installiert, die in einer Installationsausnehmung in einer hier nicht dargestellten Wand, beispielsweise im Raum eines Gebäudes, angeordnet ist.

Der Tragring 4 ist dabei dafür vorgesehen, das elektrische beziehungsweise elektronische Gerät 1 in der Installationsausnehmung zu fixieren. Der Tragring 4 weist entsprechend einen größeren Durchmesser auf als die Installationsausnehmung und liegt mit einer Anlagefläche an der Wand um die Installationsausnehmung an. Mittels geeigneter Befestigungsmittel, beispielsweise einer Schraubverbindung, kann der Tragring 4 an der Bewandung um die Installationsausnehmung befestigt werden. Das Sockelteil 5, das einen Teil der elektrischen beziehungsweise elektronischen Bauteile umfasst, die zur elektrischen Kontaktierung eines Verbrauchers mit der Spannungsversorgungseinheit 6 notwendig sind, werden am Tragring 4 befestigt. Daneben ist auch die Spannungsversorgungseinheit 6 Teil des Sockelteils 5 beziehungsweise ist am Sockelteil 5 befestigt.

Um Wärme, die von der Spannungsversorgungseinheit 6 erzeugt wird, aus dem elektrischen beziehungsweise elektronischen Gerät 1 abzuführen, ist ein Wärmeleitelement 8 vorgesehen, wobei das Wärmeleitelement 8 mit einer ersten Seite 9 mit der Spannungsversorgungseinheit 6 kontaktiert ist. Mit einer gegenüberliegenden zweiten Seite 10 steht das Wärmeleitelement 8 mit dem Tragring 4 in Kontakt. Das Wärmeleitelement 8 ist flach ausgestaltet. Durch die flache Ausgestaltung kann das Wärmeleitelement 8 platzsparend im elektrischen beziehungsweise elektronischen Gerät 1 verbaut werden.

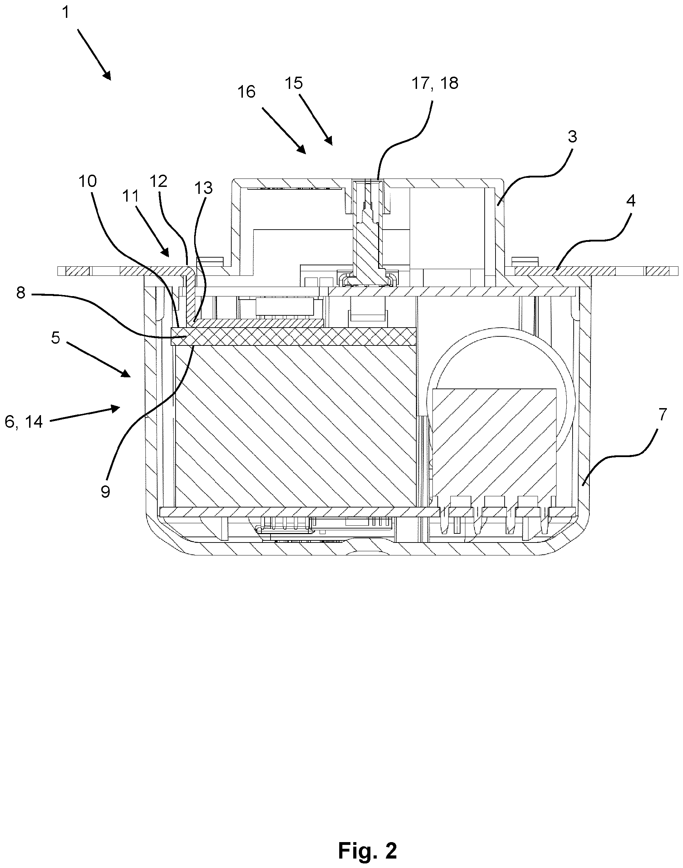

In Figur 2 ist ersichtlich, dass die Kontaktierung der ersten Seite 9 beziehungsweise der zweiten Seite 10 durch Anlegen der entsprechenden Seite an dem entsprechenden weiteren Element, also der Spannungsversorgungseinheit 6 beziehungsweise dem Tragring 4, erfolgt. Auf diese Weise kann Wärme über größere Flächen abgeführt und weiter an den Tragring 4 abgegeben werden. Die sich erwärmende Fläche wird folglich größer, sodass keine "Hotspots" entstehen, in denen in bestimmten Bereichen eine besonders hohe Wärmeentwicklung wahrgenommen werden kann, die unter Umständen schädlich für das elektrische beziehungsweise elektronische Gerät 1 sein könnten. Der Tragring 4 liegt im eingebauten Zustand des elektrischen beziehungsweise elektronischen Gerätes 1 an der Wand um die Installationsausnehmung an, in der die Unterputzdose integriert ist. Durch die Wärmeleitung über das Wärmeleitelement 8 an den Tragring 4 wird die Wärme auch aus der Unterputzdose abgeleitet und wird dort nicht gestaut.

In Figur 2 ist weiter ersichtlich, dass an dem Tragring 4 eine Wärmeleitbrücke 11 ausgebildet ist, die mit dem Wärmeleitelement 8 in Kontakt steht. Durch eine Wärmeleitbrücke 11 kann die Wärme, die durch das Wärmeleitelement 8 von der Spannungsversorgungseinheit 6 aufgenommen wird, an die Wärmeleitbrücke 11 und von der Wärmeleitbrücke 11 an den Tragring 4 übertragen werden. Dabei steht die Fläche des Tragrings 4, die an der Wand um die Installationsausnehmung anliegt, nicht in unmittelbarem Kontakt mit dem Wärmeleitelement 8, sondern ist mittelbar mit dem Wärmeleitelement 8 über die Wärmeleitbrücke 11 verbunden. Dabei ist die Wärmeleitbrücke 11 einstückig mit dem Tragring 4 ausgebildet. Denkbar wäre auch, dass die Wärmeleitbrücke 11 und das Wärmeleitelement 8 einstückig ausgebildet sind. Die Wärmeleitbrücke 11 ist von dem Tragring 4 abgebogen. Durch die einstückige Ausgestaltung der Wärmeleitbrücke 11 und des Tragrings 4 findet keine thermische Entkopplung statt, sodass eine Wärmeübertragung von dem Wärmeleitelement 8 über die Wärmeleitbrücke 11 an den Teil des Tragrings 4, der an der Wand um die Installationsausnehmung anliegt, ohne Weiteres erfolgen kann. Durch die Wärmeübertragung an den gesamten Tragring 4, verteilt sich die aufgenommene Energie entsprechend auf die gesamte Oberfläche des Tragrings 4.

Die Wärmeleitbrücke 11 weist eine erste Biegung 12 und eine zweite Biegung 13 auf. Nach der ersten Biegung 12 erstreckt sich die Wärmeleitbrücke 11, ausgehend vom Tragring 4, senkrecht zur Ebene des Teils des Tragrings 4, der dafür vorgesehen ist, an einer Installationswand anzuliegen. Nach der zweiten Biegung 13, ausgehend von dem Teil des Tragrings 4, der dafür vorgesehen ist, an einer Installationswand anzuliegen, erstreckt sich das Wärmeleitelement 8 parallel zur Ebene des Tragrings 4. Die Wärmeleitbrücke 11 hat folglich eine L-förmige Ausgestaltung. Ferner ist in Figur 2 ersichtlich, dass die Wärmeleitbrücke 11 nach der ersten Biegung 12 eine kürzere Längserstreckung aufweist als nach der zweiten Biegung 13. Der Abschnitt der Wärmeleitbrücke 11 nach der zweiten Biegung 13 liegt an dem Wärmeleitelement an.

Das Wärmeleitelement 8 deckt die Spannungsversorgungseinheit 6 mit der ersten Seite 9 derart ab, dass eine elektrische Isolierung durch das Wärmeleitelement 8 realisiert ist. Bei diesem Ausführungsbeispiel beträgt die abgedeckte Fläche 70 mm². Potentielle Funkenstrecken innerhalb des elektrischen beziehungsweise elektronischen Gerätes 1 können somit nicht entstehen. Das Wärmeleitelement 8 ist zu diesem Zweck aus einem elektrisch nicht leitenden Material hergestellt.

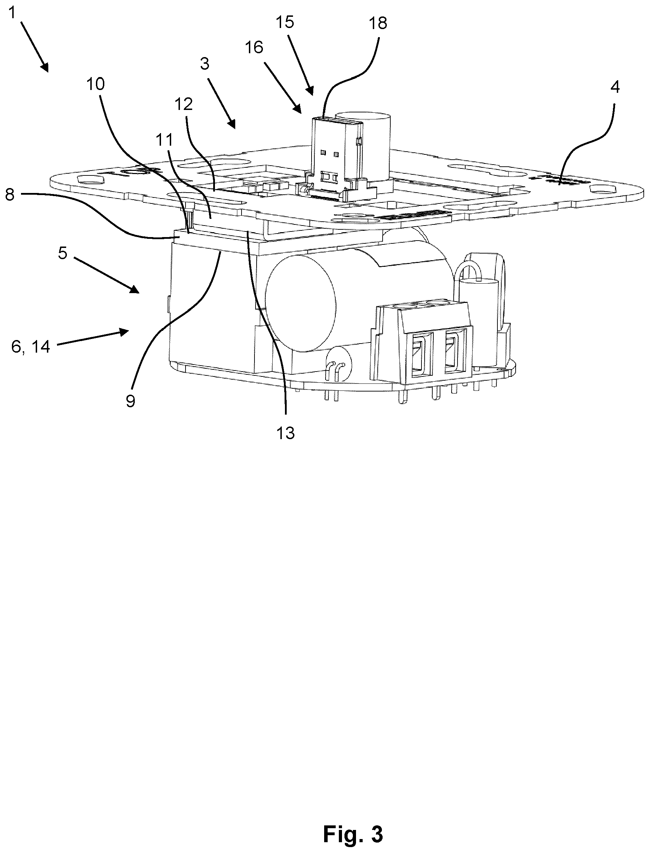

In Figur 3 ist ersichtlich, dass die Spannungsversorgungseinheit 6 ein Netzteil 14 umfasst. Durch das Netzteil 14 ist in diesem Ausführungsbeispiel eine Leistung von 60 Watt aufbringbar. Dabei umfasst das elektronische beziehungsweise elektrische Gerätes 1 eine Funktionsbaugruppe 15, wobei die Funktionsbaugruppe 15 eine Anschlusseinheit 16 aufweist und wobei die Anschlusseinheit 16 einer im Zentralstück 3 vorhandenen Anschlussausnehmung 17 zugeordnet ist. Die elektrische Anschlusseinheit 16 ist als USB-Anschluss ausgeführt, speziell als USB-Anschluss Typ-C 18. In Kombination mit einem Netzteil, das 60 Watt Leistung aufbringen kann, kann ein breites Spektrum der USB-C Funktionalität im Bereich der "Power Delivery" realisiert werden.

### Bezugszeichenliste

- 1: Elektrisches/elektronisches Gerät
- 2: Abdeckrahmen
- 3: Zentralstück
- 4: Tragring
- 5: Sockelteil
- 6: Spannungsversorgungseinheit
- 7: Gehäuse
- 8: Wärmeleitelement
- 9: Erste Seite
- 10: Zweite Seite
- 11: Wärmeleitbrücke
- 12: Erste Biegung
- 13: Zweite Biegung
- 14: Netzteil
- 15: Funktionsbaugruppe
- 16: Anschlusseinheit
- 17: Anschlussausnehmung
- 18: USB-Anschluss Typ-C

## Patentansprüche

1. Elektrisches/elektronisches Gerät (1) für die Gebäudeinstallationstechnik mit einem, von einem Abdeckrahmen (2) umgebenen Zentralstück (3) und einem, an einem Tragring (4) festgelegten Sockelteil (5), wobei am Sockelteil (5) eine Spannungsversorgungseinheit (6) festlegbar ist, die kontaktgebend mit dem Sockelteil (5) in Wirkverbindung kommt, wobei die Spannungsversorgungseinheit (6) lösbar mit dem Sockelteil (5) verbindbar ist, **dadurch gekennzeichnet, dass** ein Wärmeleitelement (8) vorgesehen ist, dass das Wärmeleitelement (8) mit einer ersten Seite (9) mit der Spannungsversorgungseinheit (6) kontaktiert ist und dass das Wärmeleitelement (8) mit einer gegenüberliegenden zweiten Seite (10) mit dem Tragring (4) in Kontakt steht.

2. Elektrisches/elektronisches Gerät (1) nach Anspruch 1, **dadurch gekennzeichnet, dass** an dem Tragring (4) eine Wärmeleitbrücke (11) ausgebildet ist, die mit dem Wärmeleitelement (8) in Kontakt steht.

3. Elektrisches/elektronisches Gerät (1) nach Anspruch 2, **dadurch gekennzeichnet, dass** die Wärmeleitbrücke (11) einstückig mit dem Tragring (4) ausgebildet ist und dass die Wärmeleitbrücke (11) von dem Tragring (4) abgebogen ist.

4. Elektrisches/elektronisches Gerät (1) nach Anspruch 3, **dadurch gekennzeichnet, dass** die Wärmeleitbrücke (11) zusätzlich einstückig mit dem Wärmeleitelement (8) ausgebildet ist.

5. Elektrisches/elektronisches Gerät (1) nach Anspruch 3 oder 4, **dadurch gekennzeichnet, dass** die Wärmeleitbrücke (11) eine erste Biegung (12) und eine zweite Biegung (13) aufweist, wobei sich die Wärmeleitbrücke (11) nach der ersten Biegung (12), ausgehend vom Tragring (4), etwa senkrecht zur Ebene des Tragrings (4) erstreckt und dass sich die Wärmeleitbrücke (11) nach der zweiten Biegung (13), ausgehend vom Tragring (4), etwa parallel zur Ebene des Tragrings (4) erstreckt.

6. Elektrisches/elektronisches Gerät (1) nach einem der Ansprüche 1 bis 5, **dadurch gekennzeichnet, dass** die Spannungsversorgungseinheit (6) einen Transformator umfasst, und dass der Transformator derart angeordnet ist, dass das Wärmeleitelement (8) mit dem Transformator in Kontakt steht.

7. Elektrisches/elektronisches Gerät (1) nach einem der Ansprüche 1 bis 5, **dadurch gekennzeichnet, dass** die Spannungsversorgungseinheit (6) ein Netzteil (14) umfasst.

8. Elektrisches/elektronisches Gerät (1) nach einem der Ansprüche 1 bis 7, **dadurch gekennzeichnet, dass** das Wärmeleitelement (8) die Spannungsversorgungseinheit (6) mit der ersten Seite (9) derart abdeckt, dass eine elektrische Isolierung durch das Wärmeleitelement (8) realisiert ist.

9. Elektrisches/elektronisches Gerät (1) nach einem der Ansprüche 1 bis 8, **dadurch gekennzeichnet, dass** das Wärmeleitelement (8) mindestens eine Fläche von mindestens 200 mm², vorzugsweise mindestens 210 mm² der Spannungsversorgungseinheit (6) kontaktiert.

10. Elektrisches/elektronisches Gerät (1) nach einem der Ansprüche 1 bis 9, **dadurch gekennzeichnet, dass** der Abdeckrahmen (2) derart angeordnet ist, dass er nicht unmittelbar in Kontakt mit dem Tragring (4) steht.

11. Elektrisches/elektronisches Gerät (1) nach einem der Ansprüche 1 bis 10, **dadurch gekennzeichnet, dass** eine Funktionsbaugruppe (15) vorgesehen ist, wobei die Funktionsbaugruppe (15) eine Anschlusseinheit (16) aufweist und wobei die Anschlusseinheit (16) einer im Zentralstück (3) vorhandenen Anschlussausnehmung (17) zugeordnet ist.

12. Verfahren zum Ableiten von Wärme eines elektrischen/elektronischen Gerätes (1) nach einem der Ansprüche 1 bis 11, **dadurch gekennzeichnet, dass** Wärme einer Spannungsversorgungseinheit (6) über ein mit der Spannungsversorgungseinheit (6) in Kontakt stehendes Wärmeleitelement (8) über eine Wärmeleitbrücke (11), die am Tragring (4) ausgebildet ist an den Tragring (4) übertragen wird.
